# EUROPÄISCHE PATENTSCHRIFT

(11) **EP 4 037 949 B1**
(45) Veröffentlichungstag und Bekanntmachung des Hinweises auf die Patenterteilung: **29.05.2024**
(21) Anmeldenummer: 20786491.9
(22) Anmeldetag: 28.09.2020
(51) Int. Cl.: B61C 15/10, B60B 39/10, B60B 39/08

(54) **VORRICHTUNG ZUM EINBRINGEN VON SAND, SCHIENENFAHRZEUG UND VERFAHREN ZUM BETREIBEN EINER VORRICHTUNG ZUM EINBRINGEN VON SAND**
DEVICE FOR INTRODUCING SAND, RAIL VEHICLE, AND METHOD FOR OPERATING A DEVICE FOR INTRODUCING SAND
DISPOSITIF POUR INTRODUIRE DU SABLE, VÉHICULE FERROVIAIRE, ET PROCÉDÉ POUR FAIRE FONCTIONNER UN DISPOSITIF POUR INTRODUIRE DU SABLE

(30) Priorität: 30.09.2019 DE 102019126363
(43) Veröffentlichungstag der Anmeldung: 10.08.2022
(73) Patentinhaber: Knorr-Bremse Gesellschaft mit beschränkter Haftung, 2340 Mödling (AT)
(72) Erfinder: HASELSTEINER, Kurt, 2340 Mödling (AT); KRISMANIC, Georg, 1020 Wien (AT)
(74) Vertreter: Aurigium Leischner & Luthe
(86) Internationale Anmeldenummer: PCT/EP2020/077110
(87) Internationale Veröffentlichungsnummer: WO 2021/063890

(56) Entgegenhaltungen:
- DE-C- 343 524
- DE-C- 689 822
- FR-A- 746 883
- GB-A- 327 832
- GB-A- 857 246
- US-A- 2 155 214

## Beschreibung

Der vorliegende Ansatz bezieht sich auf eine Vorrichtung zum Einbringen von Sand an einem Kontaktpunkt zwischen einem Rad eines Schienenfahrzeugs und einer Schiene, auf ein Schienenfahrzeug und auf ein Verfahren zum Betreiben einer Vorrichtung zum Einbringen von Sand.

Sandungssysteme dienen bei Schienenfahrzeugen dazu Sand auf die Schiene vor das den Sand überrollende Rad oder direkt in den Radschienenspalt zu bringen, um den Reibwert zwischen Rad und Schiene zu erhöhen oder auf einen ursprünglich höheren Wert zu bringen. Durch diese Maßnahme können die Traktion und die Bremsung eines Schienenfahrzeuges verbessert werden.

Die US 2 155 214 A offenbart ein Fluiddruck gesteuertes Sandungsgerät für ein Eisenbahnfahrzeug. Das Sandungsgerät umfasst ein teleskopierbares Sandrohr, dessen Austragungsöffnung für einen Sandungsvorgang zu der Schiene hinbewegt wird. Die DE 343 524 C offenbart Streuleitungen, die aus ausziehbaren Röhren bestehen und mit ihrem unteren Ende dicht gegen die Schienenoberfläche geführt werden können. Die GB 327 832 A beschreibt ein unter Verwendung eines Elektromagneten schwenkbares Sandrohr. Die DE 689 822 C beschreibt ein bewegliches Sandfallrohr. Die FR 746 883 A beschreibt ebenfalls ein verschwenkbares Sandrohr. Die GB 857 246 A beschreibt eine von einer Klammer gehaltene ausfahrbare Düse zum Ausbringen von Sand.

Vor diesem Hintergrund ist es die Aufgabe des vorliegenden Ansatzes eine verbesserte Vorrichtung zum Einbringen von Sand an einem Kontaktpunkt zwischen einem Rad eines Schienenfahrzeugs und einer Schiene, ein verbessertes Schienenfahrzeug und ein verbessertes Verfahren zum Betreiben einer Vorrichtung zum Einbringen von Sand zu schaffen.

Diese Aufgabe wird durch eine Vorrichtung zum Einbringen von Sand, ein Schienenfahrzeug und ein Verfahren zum Betreiben einer Vorrichtung zum Einbringen von Sand gemäß den unabhängigen Ansprüchen 1 und 12 gelöst.

Die mit dem vorgestellten Ansatz erreichbaren Vorteile bestehen in einer Optimierung der Sandeinbringung in den Rad-Schiene-Kontaktpunkt.

Eine Vorrichtung zum Einbringen von Sand an einem Kontaktpunkt zwischen einem Rad eines Schienenfahrzeugs und einer Schiene weist eine Austragsöffnung zum Austragen von Sand und eine Bewegungseinrichtung auf, die ausgebildet ist, um die Austragsöffnung zwischen einer Austragsposition zum Austragen von Sand während eines Sandungsvorgangs und einer Ruheposition zum geschützten Bereithalten der Austragsöffnung für einen folgenden Sandungsvorgang zu bewegen.

Die Vorrichtung kann als Ersatz eines bekannten Sandungssystem oder eines Teils eine bekannten Sandungssystems verwendet werden. Beispielsweise kann ein Sandungsrohr eines bekannten Sandungssystems durch die Vorrichtung ersetzt werden. Auch wenn hier von Sand gesprochen wird, können in entsprechender Weise auch andersartige Partikel und/oder auch Flüssigkeiten ausgetragen werden. Die Austragsöffnung kann beispielsweise durch ein freies Ende eines Rohrs oder einer Leitung oder einer Düse ausgeformt werden. Die Bewegungseinrichtung kann ausgebildet sein, um die Bewegung der Austragsöffnung automatisiert, beispielsweise unter Verwendung eines elektrischen Steuersignals oder eines Steuerdrucks auszuführen. Die Bewegungseinrichtung ist ausgebildet, um die Austragsöffnung von der Ruheposition zu der Austragsposition und wieder zurück zu bewegen. Dabei entspricht die Ruheposition einer Position der Austragsöffnung, in der die Austragsöffnung weiter von dem Rad und/oder der Schiene entfernt ist, als in der Austragsposition, wenn die Vorrichtung an dem Schienenfahrzeug montiert ist. Vorteilhafterweise kann die Austragsöffnung während des Austragens von Sand in der Austragsposition gehalten werden, um Sand möglichst direkt an dem Kontaktpunkt zwischen dem Rad und der Schiene platzieren zu können. Wenn kein Austragen von Sand erfolgt, kann die Austragsöffnung dagegen in der Ruheposition gehalten werden, in der die Austragsöffnung beispielsweise besser vor Umwelteinflüssen wie Spritzwasser geschützt ist, als in der Austragsposition. Gemäß der Erfindung ist die Bewegungseinrichtung ausgebildet, um die Austragsöffnung geradlinig zwischen der Ruheposition und der Austragsposition zu bewegen. Durch eine dynamische Veränderung der Austragsöffnung, beispielsweise durch eine dynamische Veränderung der Sandrohrposition eines die Austragsöffnung umfassenden Sandrohrs, während des Sandungsvorgangs, wird eine Optimierung der Sandeinbringung in den Rad-Schiene-Kontaktpunkt ermöglicht.

Vorteilhafterweise kann die Bewegungseinrichtung ausgebildet sein, um die Austragsöffnung ansprechend auf einen Beginn eines Sandungsvorgangs von der Ruheposition zu der Austragsposition und ansprechend auf eine Beendigung des Sandungsvorgangs von der Austragsposition zu der Ruheposition zu bewegen. Beispielsweise kann die Bewegungseinrichtung ausgebildet sein, um die Bewegung der Austragsöffnung von der Ruheposition zu der Austragsposition unter Verwendung eines Signals durchführen, dass den Sandungsvorgang anzeigt oder bewirkt. Ein den Sandungsvorgang anzeigendes Signal kann beispielsweise ein von einer den Sandungsvorgang steuernden Steuereinrichtung bereitgestelltes Signal repräsentieren. Ein den Sandungsvorgang bewirkendes Signal kann beispielsweise ein Luftstrom sein, der zum Fördern des Sands während des Sandungsvorgangs verwendet wird. Ein entsprechendes Signal kann somit beispielsweise ein elektrisches Signal oder ein pneumatisches oder hydraulisches Signal sein. Gemäß unterschiedlicher Ausführungsformen kann die Bewegungseinrichtung ausgebildet sein, um die Austragsöffnung unter Verwendung pneumatischer, hydraulischer oder elektrischer Energie zu bewegen. Somit kann beispielsweise eine ohnehin im Bereich der Vorrichtung zur Verfügung stehende Energieform verwendet werden, um die Austragsöffnung zu bewegen.

Die Bewegungseinrichtung kann einen Druckluftzylinder aufweisen und ausgebildet sein, um die Austragsöffnung ansprechend auf eine Beaufschlagung des Druckluftzylinders mit Druck zu bewegen. Ein Druckluftzylinder kann kostengünstig realisiert werden und bietet eine hohe Ausfallsicherheit.

Die Bewegungseinrichtung kann eine Förderluftdruck-Schnittstelle zum Beaufschlagen der Bewegungseinrichtung mit einem Förderluftdruck von Förderluft zum Fördern von Sand zu der Austragsöffnung aufweisen. In diesem Fall kann die Bewegungseinrichtung ausgebildet sein um die Austragsöffnung unter Verwendung des Förderluftdrucks zu bewegen. Auf diese Weise ist keine separate Druckleitung erforderlich. Alternativ oder zusätzlich kann die Bewegungseinrichtung eine pneumatische Schnittstelle, beispielsweise zum Empfangen von Druckluft aus einem Druckluftvorrat des Schienenfahrzeugs aufweisen.

Die Bewegungseinrichtung kann eine elektrische Schnittstelle zu einer Steuereinrichtung des Schienenfahrzeugs aufweisen und ausgebildet sein, um die Austragsöffnung unter Verwendung eines über die Schnittstelle empfangenen elektrischen Steuersignals zu bewegen. Dies bietet sich beispielsweise an, um die Austragsöffnung unter Verwendung eines elektrischen Antriebs zu bewegen. Auch eignet sich ein elektrisches Steuersignal zum Ansteuern eines Ventils über das beispielsweise eine Bereitstellung von Druck an den Druckluftzylinder gesteuert werden kann.

Die Vorrichtung kann eine beweglich gelagerte Konsole umfassen. Sie umfasst ferner ein die Austragsöffnung umfassendes und an der Konsole befestigtes Sandrohr. Die Bewegungseinrichtung kann ausgebildet sein um die Konsole zu bewegen, um die Austragsöffnung zwischen einer Austragsposition und einer Ruheposition zu bewegen. Eine solche Konsole ermöglicht eine einfache Übertragung eines Antriebsmoments zum Bewegen der Austragsöffnung auf das Sandrohr.

Die Vorrichtung kann ein die Austragsöffnung umfassendes Teleskoprohr umfassen.

Dabei kann die Bewegungseinrichtung ausgebildet sein, um Teilröhren des Teleskoprohr relativ zu einander zu bewegen, um die Austragsöffnung zwischen einer Austragsposition und einer Ruheposition zu bewegen. Dies ermöglicht eine sehr kompakte Bauform.

Die Vorrichtung kann ein die Austragsöffnung umfassendes Endstück umfassen, das mechanisch mit der Bewegungseinrichtung verbunden ist. Das Endstück kann vorteilhaft als ein auswechselbares Verschleißteil ausgeführt sein. Je nach Ausführungsform kann das Endstück direkt oder über zumindest ein weiteres Teil mit der Bewegungseinrichtung verbunden sein. Somit kann das Endstück beispielsweise als ein von der Bewegungseinrichtung aufgenommenes Sandrohr ausgeformt sein oder an einem solchen Sandrohr montiert sein. Das Endstück und eine Anbindung des Endstücks kann so ausgeführt sein, dass sich eine Beschädigung des Endstücks nicht auf weitere Teile der Vorrichtung auswirkt.

Die Vorrichtung kann zumindest ein elastisches Element zum elastischen Lagern der Austragsöffnung aufweisen. Auf diese Weise kann der Austragsöffnung eine gewisse Bewegungsfreiheit gewährt werden.

Gemäß der Erfindung ist die Bewegungseinrichtung ausgebildet, die Austragsöffnung linear zu bewegen. Auf diese Weise kann eine Bewegungsbahn der Austragsöffnung beispielsweise an konstruktive Gegebenheiten des Schienenfahrzeugs angepasst sein, an dem die Vorrichtung verbaut wird.

Die Vorrichtung kann einen Sandkasten zum Bevorraten von Sand und eine Dosiereinrichtung zum Bereitstellen von Sand aus dem Sandkasten an die Austragsöffnung umfassen. Die Vorrichtung kann weitere Einrichtungen umfassen, die bekannten Einrichtungen eines Sandungssystems entsprechen können. Auf diese Weise kann die Vorrichtung als vollwertiger Ersatz eines Sandungssystem ohne automatisiert bewegbaren Sandrohrs verwendet werden.

Ein entsprechendes Schienenfahrzeugs umfasst eine Ausführungsform der genannten Vorrichtung. Die Vorrichtung kann benachbart zu dem Rad angeordnet sein. Dabei befindet sich die Austragsöffnung in der Austragsposition näher an dem Kontaktpunkt als in der Ruheposition. Die Vorrichtung kann beispielsweise an einer Karosserie oder einem Radgestell des Schienenfahrzeugs befestigt sein.

Ein Verfahren zum Betreiben einer genannten Vorrichtung umfasst einen Schritt des Hinbewegens des Sandrohrs mit der Austragsöffnung von der Ruheposition in die Austragsposition ansprechend auf einen Beginn eines Sandungsvorgangs, und ein Zurückbewegen des Sandrohrs mit der Austragsöffnung von der Austragsposition in die Ruheposition ansprechend auf ein Ende des Sandungvorgangs, wobei das Sandrohr jeweils geradlinig entlang der Längserstreckungsachse des Sandrohrs bewegt wird.

Auf diese Weise kann die Austragsöffnung im Zusammenhang mit der Durchführung eines Sandungsvorgangs automatisiert zwischen den Positionen hin und her bewegt werden.

Dabei können die Schritte des Hinbewegens und Zurückbewegens durchgeführt werden, während das Schienenfahrzeug auf der Schiene fährt. Somit kann das Verfahren beispielsweise ausgeführt werden, wenn das Schienenfahrzeug unter Sandeinbringung abgebremst wird.

Ausführungsbeispiele des hier vorgestellten Ansatzes werden in der nachfolgenden Beschreibung mit Bezug zu den Figuren näher erläutert. Es zeigen:
Fig. 1 eine schematische seitliche Darstellung eines Schienenfahrzeugs mit einer Vorrichtung zum Einbringen von Sand an einem Kontaktpunkt zwischen einem Rad des Schienenfahrzeugs und einer Schiene gemäß einem Ausführungsbeispiel;
Fig. 2 eine schematische Darstellung einer Vorrichtung zum Einbringen von Sand gemäß einem Ausführungsbeispiel;
Fig. 3 eine schematische Darstellung einer Vorrichtung zum Einbringen von Sand gemäß einem Ausführungsbeispiel;
Fig. 4 ein Ablaufdiagramm eines Verfahrens zum Betreiben einer Vorrichtung zum Einbringen von Sand gemäß einem Ausführungsbeispiel;
Fig. 5 eine Darstellung einer Vorrichtung zum Einbringen von Sand gemäß einem Ausführungsbeispiel; und
Fig. 6 eine Darstellung einer Vorrichtung zum Einbringen von Sand gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

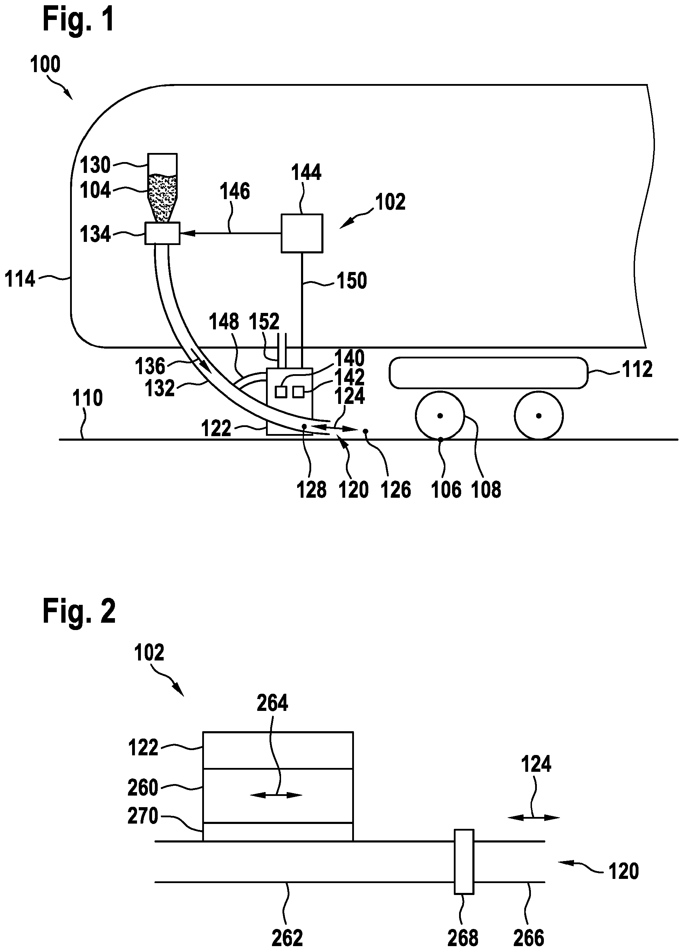

Fig. 1 zeigt eine schematische seitliche Darstellung eines Schienenfahrzeugs 100 mit einer Vorrichtung 102 zum Einbringen von Sand 104 an einem Kontaktpunkt 106 zwischen einem Rad 108 des Schienenfahrzeugs 100 und einer Schiene 110 gemäß einem Ausführungsbeispiel. Genauer gesagt ist lediglich ein Teil, beispielsweise ein vorderer Abschnitt des Schienenfahrzeugs 100 dargestellt. Die Vorrichtung 102 ist beispielhaft in einer an dem Schienenfahrzeug 100 montierten Zustand gezeigt. Beispielsweise ist die Vorrichtung 102 vollständig oder teilweise an einem Drehgestell 112 oder einer Karosserie 114 des Schienenfahrzeugs 100 befestigt.

Die Vorrichtung 102 weist eine Austragsöffnung 120 auf, durch die während eines Sandungsvorgangs Sand 104 ausgetragen werden kann. Ferner weist die Vorrichtung 102 eine Bewegungseinrichtung 122 auf. Die Bewegungseinrichtung 122 ist mit der Austragsöffnung 120 gekoppelt und ausgebildet, um eine Bewegung 124 der Austragsöffnung 120 zu bewirken. Durch die Bewegung 124 wird die Austragsöffnung 120 zwischen einer Austragsposition 126 und einer Ruheposition 128 hin und her bewegt.

Gemäß der Erfindung handelt es sich bei der Bewegung 124 um eine Linearbewegung, wobei vorzugsweise ein Abstand zwischen der Austragsposition 126 und der Ruheposition 128 mehrere Zentimeter, beispielsweise mehr als 5cm, mehr als 10cm oder mehr als 20cm beträgt.

Gemäß der Erfindung befindet sich die Austragsposition 126 näher an dem Kontaktpunkt 106 als die Ruheposition 128. Somit ist es vorteilhaft, wenn sich die Austragsöffnung 120 während eines Sandungsvorgangs, während dem Sand 104 aus der Austragsöffnung 120 ausgetragen wird, in der Austragsposition 126 befindet. Wenn kein Sandungsvorgang stattfindet, also kein Sand 104 aus der Austragsöffnung 120 ausgetragen wird, ist es dagegen vorteilhaft, wenn sich die Austragsöffnung 120 in der Ruheposition 128 befindet.

Gemäß einem Ausführungsbeispiel ist die Bewegungseinrichtung 122 ausgebildet, um die Austragsöffnung 120 automatisiert während einer Fahrt des Schienenfahrzeugs 100, also während das Schienenfahrzeug 100 über die Schiene 110 fährt, zwischen der Ruheposition 128 und der Austragsposition 126 und umgekehrt zu bewegen. Beispielsweise ist die die Bewegungseinrichtung 122 ausgebildet oder wird die Bewegungseinrichtung 122 so angesteuert, dass die Austragsöffnung 120 ansprechend auf einen bevorstehenden Sandungsvorgang oder ansprechend auf einen Beginn des Sandungsvorgangs von der Ruheposition 128 in die Austragsposition 126 bewegt wird. Entsprechend ist die die Bewegungseinrichtung 122 beispielsweise ausgebildet oder wird die Bewegungseinrichtung 122 so angesteuert, dass die Austragsöffnung 120 ansprechend auf eine bevorstehende Beendigung eines Sandungsvorgang oder ansprechend auf eine Beendigung des Sandungsvorgangs von der Austragsposition 126 in die Ruheposition 128 bewegt wird.

Gemäß einem Ausführungsbeispiel ist der Sand 104 in einem Sandkasten 130 bevorratet und wird über eine Leitung, beispielsweise eine Sandleitung 132 aus dem Sandkasten 130 an die Austragsöffnung 120 bereitgestellt. Beispielsweise ist dazu eine Dosiereinrichtung 134 vorgesehen, die zum Durchführen eines Sandungsvorgangs Sand 104 aus dem Sandkasten 130 fördert oder auslässt. Dabei kann auf Elemente bekannter Sandungsanlagen für Schienenfahrzeuge zurückgegriffen werden. Der Sandkasten 130, die Sandleitung 132 und/oder die Dosiereinrichtung 134 können Teil der Vorrichtung 102 sein oder mit der Vorrichtung 102 gekoppelt sein. Gemäß einem Ausführungsbeispiel wird die Austragsöffnung 120 beispielsweise durch ein freies Ende der Sandungsleitung 132 oder eines Sandungsrohrs ausgeformt. Gemäß einem Ausführungsbeispiel wird der Sand 104 unter Verwendung von Förderluft 136 zu der Austragsöffnung 120 gefördert. Die Sandleitung 132 kann auf eine geeignete Weise ausgeformt sein, beispielsweise kann die Sandleitung 132 eine Schlauchabschnitt und einen mit den Schlauchabschnitt gekoppelten Rohrabschnitt aufweisen. Ein entsprechender Schlauchabschnitt wird auch als Sandschlauch und ein entsprechender Rohrabschnitt als Sandrohr bezeichnet. Ein freies Ende eines solchen Sandrohrs formt die Austragsöffnung 120 aus. Erfindungsgemäß wird eine Bewegung des Sandrohrs durchgeführt, um die Austragsöffnung 120 zwischen der Austragsposition 126 und der Ruheposition 128 zu bewegen.

Gemäß einem Ausführungsbeispiel umfasst die Bewegungseinrichtung 122 zumindest einen geeigneten Antrieb zum Bewirken der Bewegung 124 der Austragsöffnung 120. Beispielsweise umfasst die Bewegungseinrichtung 122 eine pneumatische Antriebseinrichtung, beispielsweise in Form eines Druckluftzylinders 140, und/oder eine elektrische Antriebseinrichtung, beispielsweise in Form eines Elektromotors 142, und/oder eine hydraulische Antriebseinrichtung.

Gemäß einem Ausführungsbeispiel weist das Schienenfahrzeug 100 eine elektronische Steuereinrichtung 144 zum Steuern eines Sandungsvorgangs auf. Die Steuereinrichtung 144 ist beispielsweise ausgebildet, um ein Dosiersignal 146 an die Dosiereinrichtung 134 bereitzustellen, um eine Ausgabe von Sand 104 während eines Sandungsvorgangs zu steuern, also beispielsweise eine Ausgabe von Sand 104 zu starten und zu beenden.

Gemäß einem Ausführungsbeispiel wird der Sand 104 unter Verwendung der Förderluft 136 in Richtung der Austragsöffnung 120 gefördert. Die Bewegungseinrichtung 122 weist gemäß einem Ausführungsbeispiel eine Förderluftdruck-Schnittstelle 148 zum Beaufschlagen der Bewegungseinrichtung 122, beispielsweise zum Beaufschlagen des Druckluftzylinders 140, mit einem Förderluftdruck der Förderluft 136 auf. In diesem Fall wird die Förderluft 136 zusätzlich zum Fördern von Sand 104 zum Bewegen der Austragsöffnung 120 von der Ruheposition 128 in die Austragsposition 126 verwendet. Dazu ist der Druckluftzylinders 140 mechanisch mit der Austragsöffnung 120 gekoppelt und ein Antriebsmoment des Druckluftzylinders 140 wird zum Bewirken der Bewegung 124 der Austragsöffnung 120 verwendet. Beispielsweise ist eine Federeinrichtung vorgesehen, um den Druckluftzylinder 140 bei einem Abfall eines an der Förderluftdruck-Schnittstelle 148 anliegenden Drucks zurückzustellen.

Gemäß einem Ausführungsbeispiel weist die Bewegungseinrichtung 120 eine elektrische Schnittstelle zum Empfangen eines elektrischen Steuersignals 150 auf, das beispielsweise von der elektronischen Steuereinrichtung 144 bereitgestellt wird. Die Bewegungseinrichtung 120 ist ausgebildet, um den Elektromotor 142 zum Ansteuern des Elektromotors 142 zu verwenden. Der Elektromotor 142 ist mechanisch mit der Austragsöffnung 120 gekoppelt und ein Antriebsmoment des Elektromotors 142 wird zum Bewirken der Bewegung 124 der Austragsöffnung 120 verwendet.

Gemäß einem Ausführungsbeispiel weist die Bewegungseinrichtung 120 eine pneumatische Schnittstelle 152 zum Empfangen von Druckluft auf. Eine Bereitstellung der Druckluft an die pneumatische Schnittstelle 152 wird beispielsweise von der Steuereinrichtung 144 gesteuert, beispielsweise durch Öffnen und Schließen eines Druckluftventils über das die pneumatische Schnittstelle 152 mit einem Druckluftvorrat gekoppelt ist. Die Bewegungseinrichtung 120 ist ausgebildet, um die Druckluft zum Ansteuern des Druckluftzylinder 140 zu verwenden. Entsprechend kann auch ein hydraulischer Druck verwendet werden.

Die Ausführungsbeispiel zum Ansteuern der Bewegungseinrichtung 120 sind nur beispielhaft genannt und können auch miteinander kombiniert werden.

Gemäß der Erfindung ist die Bewegungseinrichtung 122 ausgebildet, um die Austragsöffnung 120 linear zwischen der Ruheposition 128 und der Austragsposition 126 hin und her zu bewegen. Eine geradlinige Bewegung der Austragsöffnung 120 lässt sich einfach realisieren. Ein zusätzliche Schwenkbewegung der Austragsöffnung 120 ist beispielsweise vorteilhaft, um einen bestmöglichen Schutz der Austragsöffnung 120 vor Umwelteinflüssen in der Ruheposition 128 zu erreichen, aber nicht Teil der Erfindung.

Die Schwenkbewegung könnte in einer Ebene verlaufen, die senkrecht zu der Achse des Rads 108 ausgerichtet ist, und in einer Ebene, die parallele oder schräg zu der Achse des Rads 108 ausgerichtet ist.

Die Vorrichtung 102 stellt gemäß einem Ausführungsbeispiel ein Sandungssystem oder einen Teil eines Sandungssystems dar, das einen erheblichen Faktor zur Risikominderung betreffend Unfälle beitragen, da bei einer Bremsung mit aktivierter Sandausbringung der Bremsweg verkürzt werden kann.

Sand 104 wird dabei in der Regel mit Druckluft aus der Sandleitung 132, beispielsweise einem Rohr oder Schlauch in Richtung des Rad-Schiene-Spaltes geblasen. Die Sandleitung 132 wird dazu in der Regel mit einer Befestigung am Rahmen des Drehgestell 112 befestigt. Die Befestigung ist optional auch noch mit einer Verstellmöglichkeit versehen um die Position der Sandleitung 132in Relation zum auch als Radaufstandspunkt bezeichneten Kontaktpunk 106 bei auftretendem Radverschleiß und anschließender Reprofilierung einstellen zu können. Diese optionale Verstellmöglichkeit ist nur im Stillstand und nur durch das Wartungspersonal bedienbar. Das Rad 108 führt auch eine Relativbewegung im Drehgestellrahmen aus wodurch die Austragsöffnung 120 nicht beliebig nahe an das Rad 108 positioniert werden kann. Nur der Sand 104, welcher in den Radschienenspalt gelangt, trägt zu der erwünschten Kraftschlussbeiwerterhöhung bei. Wird Sand 104 aus der Austragsöffnung 120, also aus einem Sandrohr, geblasen, so bildet sich ein Streukegel der selbst im günstigsten Fall einen Öffnungswinkel von 10° einnimmt. Je weiter die Austragsöffnung 120, die auch als Sandrohröffnung bezeichnet werden kann, vom Kontaktpunkt 106 entfernt positioniert ist, desto kleiner wird der Anteil der Sandkörner welche in den relevanten wirksamen Bereich des Kontaktpunktes 106 gelangen. Für den Sandrohreinbau gibt es Richtwerte für die geometrische Positionierung in Relation zum Rad 108. Hier wird nur teilweise versucht den Sandeintrag zu optimieren. Der Anbau ist auch von anderen Aspekten wie die Selbstentleerung der Sandleitung 132, Reduktion der Gefahr, dass Spritzwasser in die Sandleitung 132 eindringt, beeinflusst. Gemessene wirksame Sandmengen bekannter Sandungssystem liegen im Bereich von unter 30% der ausgebrachten Sandmenge. 70 % des ausgebrachten Sandes 104 verschwindet ungenutzt im Gleisbett und führt dort zu Verschmutzungen. Durch die Bewegung der Austragsöffnung 120 in die Austragsposition 126 kann der Anteil der wirksamen Sandmenge erhöht werden.

Gemäß einem Ausführungsbeispiel umfasst die Vorrichtung 102 einen Mechanismus, mit dem die Austragsöffnung 120 während des Sandungsvorganges sehr nahe an das Rad 108 heranführt wird und mit dem nach Beendigung des Sandungsvorganges die Austragsöffnung 120 wieder in einen sicheren Abstand in eine geschütztere Umgebung zurückstellt wird. Ein solcher Mechanismus zum Bewegen der Austragsöffnung 120 ist beispielsweise von der Bewegungseinrichtung 122 umfasst. Entsprechen geometrischer Überlegungen kann die wirksame Sandmenge im Vergleich zu bekannten Sandungssystemen verdoppelt werden. Dies führt zu einer deutlichen Verbesserung der Wirkung bei gleicher ausgebrachter Sandmenge. Es besteht aber auch die Möglichkeit bei gleicher Wirkung die Austragsmengen deutlich zu verkleinern. In beiden Fällen ist die Menge an ungenutztem Sand 104 deutlich kleiner, was die Gleisverschmutzung signifikant verringert. Somit ermöglicht der Mechanismus eine dynamische Veränderung der Sandrohrposition.

Gemäß einem Ausführungsbeispiel fordert der Fahrzeugführer oder auch z.B. eine Gleitschutzeinrichtung über eine Fahrzeugsteuerung während der Fahrt die Sandung an. Die Sandungssteuerung, beispielsweise in Form der Steuereinrichtung 144 aktiviert den Sanddosierer, beispielsweise in Form der Dosiereinrichtung 134, der aus dem Sandkasten 130 Sand 104 dosiert und durch die Sandleitung 132 und die Austragsöffnung 120 in den Radschienespalt fördert. Gemäß einem Ausführungsbeispiel wird gleichzeitig mit dem Sandungsvorgang die mechanische Zustellung der Austragsöffnung 120, beispielsweise des gesamten Sandrohres, an das Rad 108 ausgelöst. Der Sand 104 wird im Radschienespalt zu einem sehr hohen Anteil zermahlen. Nach dem Ende des Sandungsvorganges wird die Austragseinrichtung und somit die Austragsöffnung 120 wieder in de Ausgangsposition zurückgestellt, die in Fig. 1 als Ruheposition 128 dargestellt ist.

Gemäß einem Ausführungsbeispiel ist die Austragsöffnung 120 Teil eines Sandrohrs, das auf einer beweglich gelagerten Konsole befestigt ist. Die Konsole wird über einen Druckluftzylinder zwischen zwei Position bewegt, wodurch die Austragsöffnung 120 zwischen der Ruheposition 128 und der Austragsposition 126 bewegt wird.

Gemäß einem Ausführungsbeispiel wird ein Teleskoprohr verwendet. Dies entspricht einer Rohr-in-Rohr-Version, wobei die Austragsöffnung 120 durch Aus- und Einfahren des Teleskoprohrs zwischen der Ruheposition 128 und der Austragsposition 126 bewegt wird.

Gemäß einem Ausführungsbeispiel liegt ein gekoppelter Druck für die Förderluft 136 und den Druckluftzylinder 140 vor. Der Druckluftzylinder 140 wird mit der Förderluft 136 der Dosiereinrichtung 134 gekoppelt. Sobald die Dosiereinrichtung 134 mit Förderluftdruck beaufschlagt wird, wird auch der Druckluftzylinder 140 mit Förderluft 136 beaufschlagt. Dies kann abhängig oder unabhängig von der Dosierluft oder einer mechanischen Dosierung erfolgen.

**Fig. 2** zeigt eine schematische Darstellung einer Vorrichtung 102 zum Einbringen von Sand gemäß einem Ausführungsbeispiel. Dabei kann es sich um ein Ausführungsbeispiel der anhand von Fig. 1 beschriebenen Vorrichtung handeln.

Die Vorrichtung 102 weist eine beweglich gelagerte Konsole 260 und ein Sandrohr 262 auf, das an der Konsole 260 befestigt ist. Das Sandrohr 262 weist die Austragsöffnung 120 auf. Das Sandrohr 262 ist beispielsweise mit der in Fig. 1 genannten Sandleitung verbunden oder stellt eine entsprechende Sandleitung dar. Die Bewegungseinrichtung 122 ist ausgebildet, um eine Bewegung 264 der Konsole 260 zu bewirken, die zu der Bewegung 124 der Austragsöffnung 120 führt.

Gemäß einem Ausführungsbeispiel weist die Vorrichtung 102 ein die Austragsöffnung 122 umfassendes Endstück 266 auf. Gemäß diesem Ausführungsbeispiel ist das Endstück 266 als ein auswechselbares Verschleißteil ausgeführt. Das Endstück 266 ist mechanisch mit dem Sandrohr 262 verbunden und kann bei einer Beschädigung des Endstücks 266 leicht ausgetauscht werden. Dazu ist das Endstück 266 beispielsweise über eine geeignete wiederlösbare Verbindungseinrichtung 268 mit dem Sandrohr 262 verbunden.

Zusätzlich oder alternativ ist das Sandrohr 262 als ein Verschleißteil ausgeführt, das bei einer Beschädigung komplett ausgetauscht werden kann.

Gemäß einem Ausführungsbeispiel ist zumindest ein elastisches Element 270 zum elastischen Lagern der Austragsöffnung 120 vorgesehen. Beispielsweise ist das elastische Element 270 an einer Verbindungsstelle zwischen dem Sandrohr 262 und der Konsole 260 vorsehen. Alternativ ist das elastische Element 270 oder ein weiteres elastisches Element an einer anderen geeigneten Stelle der Vorrichtung 102 angeordnet.

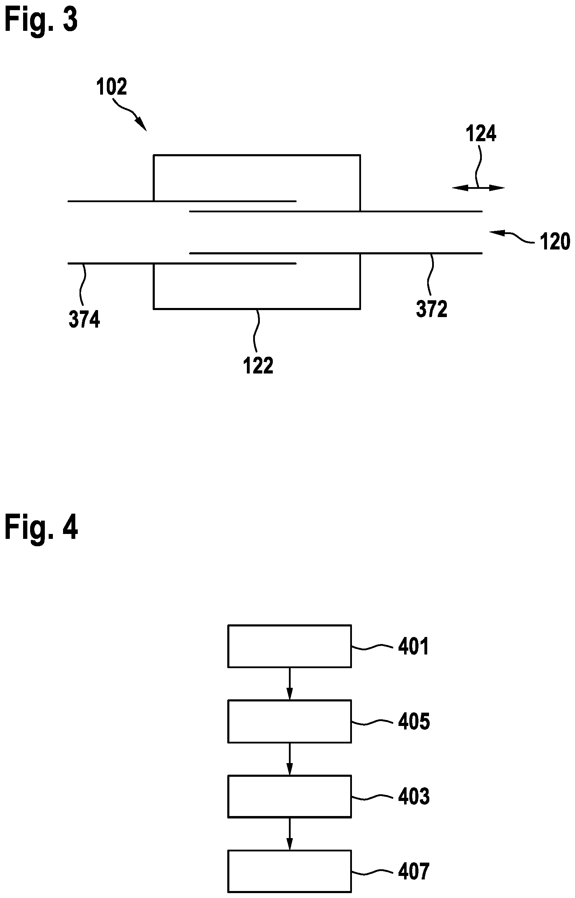

Auch wenn die Verwendung eines Verschleißteils und/oder einer elastischen Lagerung der Austragsöffnung 120 anhand dieses Ausführungsbeispiels beschrieben ist, können diese Ansätze auch im Zusammenhang mit andere Ausführungsbeispielen der Vorrichtung 102 verwendet werden, beispielsweise im Zusammenhang mit dem anhand von Fig. 3 beschriebenen Ausführungsbeispiel.

**Fig. 3** zeigt eine schematische Darstellung einer Vorrichtung 102 zum Einbringen von Sand gemäß einem Ausführungsbeispiel. Dabei kann es sich um ein Ausführungsbeispiel der anhand von Fig. 1 beschriebenen Vorrichtung handeln.

Die Vorrichtung 102 weist ein Teleskoprohr mit zumindest einer ersten Teilröhre 372 und einer zweiten Teilröhre 374 auf. Beispielhaft formt ein freies Ende der ersten Teilröhre 372 die Austragsöffnung 120 aus. Die zweite Teilröhre 374 ist beispielsweise mit der in Fig. 1 genannten Sandleitung verbunden oder stellt eine entsprechende Sandleitung dar.

Die Bewegungseinrichtung 122 ist ausgebildet ist, um die Teilröhren 372, 374 des Teleskoprohrs relativ zu einander zu bewegen. Dadurch wird die Bewegung 124 der Austragsöffnung 120 zwischen der Austragsposition und der Ruheposition bewirkt.

**Fig. 4** zeigt ein Ablaufdiagramm eines Verfahrens zum Betreiben einer Vorrichtung zum Einbringen von Sand gemäß einem Ausführungsbeispiel. Das Verfahren kann beispielsweise zum Betreiben einer Vorrichtung verwendet werden, wie sie anhand der vorangegangenen oder nachfolgenden Figuren beschrieben ist.

Das Verfahren umfasst einen Schritt 401, in dem die Austragsöffnung der Vorrichtung von der Ruheposition in die Austragsposition bewegt wird. Der Schritt 401 wird ansprechend auf einen Beginn eines Sandungsvorgangs ausgeführt, also beispielsweise mit Beginn des Austragens von Sand aus der Austragsöffnung oder mit Beginn des Auslassens von Sand aus einem Sandkasten. Alternativ kann der Schritt 401 auch bereits kurz vor dem Beginn des Austragens oder kurz nach dem Beginn des Austragens von Sand ausgeführt werden.

In einem Schritt 403 wird die Austragsöffnung von der Austragsposition in die Ruheposition zurückbewegt. Der Schritt 403 wird ansprechend auf ein Ende des Sandungsvorgangs ausgeführt, also beispielsweise mit Beendigung des Austragens von Sand aus der Austragsöffnung oder einem Sandkasten. Alternativ kann der Schritt 403 auch bereits kurz vor der Beendigung des Austragens oder kurz nach der Beendigung des Austragens von Sand ausgeführt werden.

Gemäß einem Ausführungsbeispiel umfasst das Verfahren optional einen Schritt 405, in dem Sand bereitgestellt wird, beispielsweise aus einem Sandkasten zu der Austragsöffnung gefördert wird, und einen Schritt 407, in dem die Bereitstellung des Sands beendet wird. Die Schritte 405, 407 können beispielsweise durch eine geeignete Ansteuerung der anhand von Fig. 1 beschriebenen Dosiereinrichtung durchgeführt werden.

Je nach Ausführungsform kann der Schritt 405 zeitlich vor oder kurz nach oder zeitgleich zu dem Schritt 401 ausgeführt werden. Entsprechend kann der Schritt 407 zeitlich vor oder kurz nach oder zeitgleich zu dem Schritt 403 ausgeführt werden. Somit kann die Bereitstellung von Sand mit dem Verfahren der Austragsöffnung auf geeignete Weise synchronisiert ausgeführt werden.

Vorteilhafterweise können die Schritte 401, 403, 405, 407 während einer Fahrt des Schienenfahrzeugs durchgeführt werden, beispielsweise im Zusammenhang mit einem Bremsvorgang.

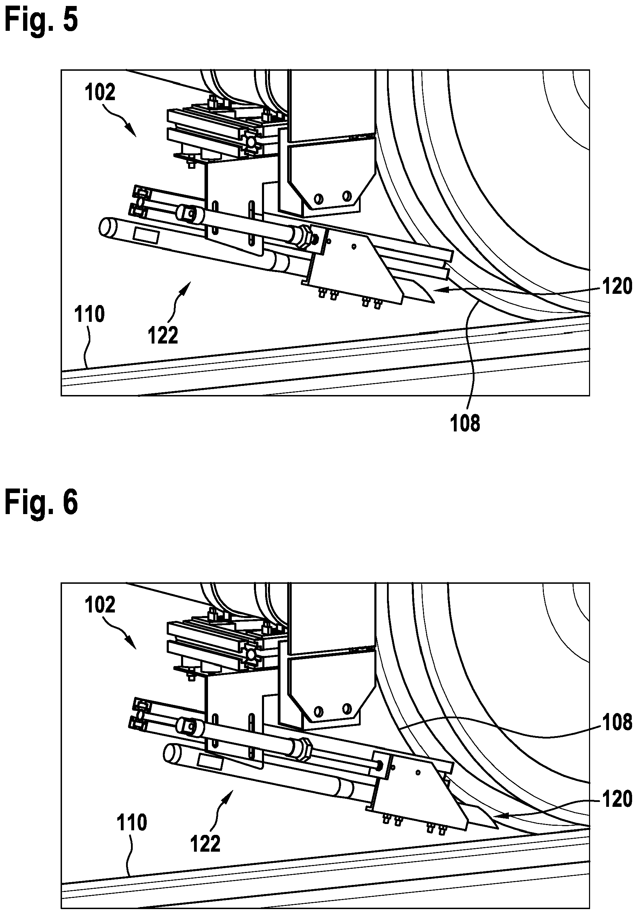

**Fig. 5** zeigt eine Darstellung einer Vorrichtung 102 zum Einbringen von Sand gemäß einem Ausführungsbeispiel. Dabei kann es sich um ein Ausführungsbeispiel der anhand von Fig. 1 beschriebenen Vorrichtung handeln. Die Vorrichtung 102 ist an einem Schienenfahrzeug montiert, von dem ein sich auf einer Schiene 110 befindliches Rad 108 dargestellt ist. Die Austragsöffnung 120 wird unter Verwendung der Bewegungseinrichtung 122 in der Ruheposition gehalten.

**Fig. 6** zeigt eine Darstellung der anhand von Fig. 5 beschriebenen Vorrichtung 102 zum Einbringen von Sand gemäß einem Ausführungsbeispiel, wobei die Austragsöffnung 120 unter Verwendung der Bewegungseinrichtung 122 in die Austragsposition bewegt wurde.

### BEZUGSZEICHENLISTE

- 100: Schienenfahrzeug
- 102: Vorrichtung
- 104: Sand
- 106: Kontaktpunkt
- 108: Rad
- 110: Schiene
- 112: Drehgestell
- 114: Karosserie
- 120: Austragsöffnung
- 122: Bewegungseinrichtung
- 124: Bewegung
- 126: Austragsposition
- 128: Ruheposition
- 130: Sandkasten
- 132: Sandleitung
- 134: Dosiereinrichtung
- 136: Förderluft
- 140: Druckluftzylinder
- 142: Elektromotor
- 144: elektronische Steuereinrichtung
- 146: Dosiersignal
- 148: Förderluftdruck-Schnittstelle 148
- 150: elektrisches Steuersignal
- 152: pneumatische Schnittstelle

- 260: Konsole
- 262: Sandrohr
- 264: Bewegung der Konsole
- 266: Endstück
- 268: Verbindungseinrichtung 268
- 270: elastisches Element
- 372: erste Teilröhre
- 374: zweite Teilröhre

- 401: Schritt 401 des Hinbewegens
- 403: Schritt des Zurückbewegens
- 405: Schritt des Bereitstellens
- 407: Schritt des Beendens

## Patentansprüche

1. Vorrichtung (102) zum Einbringen von Sand (104) an einem Kontaktpunkt (106) zwischen einem Rad (108) eines Schienenfahrzeugs (100) und einer Schiene (110), wobei die Vorrichtung (102) die folgenden Merkmale aufweist:
ein Sandrohr (262) mit einer Austragsöffnung (120) zum Austragen von Sand (104); und
eine Bewegungseinrichtung (122), die ausgebildet ist, um das Sandrohr (262) geradlinig entlang einer Längserstreckungsachse des Sandrohrs (262) zu bewegen, um die Austragsöffnung (120) zwischen einer Austragsposition (126) zum Austragen von Sand während eines Sandungsvorgangs und einer Ruheposition (128) zum geschützten Bereithalten der Austragsöffnung (120) für einen bevorstehenden Sandungsvorgang zu bewegen;
**dadurch gekennzeichnet, dass**
die Austragsöffnung (120) in der Ruheposition weiter von dem Rad (108) und der Schiene (110) entfernt ist als in der Austragsposition, wenn die Vorrichtung (102) an dem Schienenfahrzeug (100) montiert ist.

2. Vorrichtung (102) gemäß Anspruch 1, bei der die Bewegungseinrichtung (122) ausgebildet ist, um die Austragsöffnung (120) ansprechend auf einen Beginn eines Sandungsvorgangs von der Ruheposition (128) zu der Austragsposition (126) und ansprechend auf eine Beendigung des Sandungsvorgangs von der Austragsposition (126) zu der Ruheposition (128) zu bewegen.

3. Vorrichtung (102) gemäß einem der vorangegangenen Ansprüche, bei der die Bewegungseinrichtung (122) einen Druckluftzylinder (140) aufweist, und ausgebildet ist, um die Austragsöffnung (120) ansprechend auf eine Beaufschlagung des Druckluftzylinders (140) mit Druck zu bewegen.

4. Vorrichtung (102) gemäß einem der vorangegangenen Ansprüche, bei der die Bewegungseinrichtung (122) eine Förderluftdruck-Schnittstelle (148) zum Beaufschlagen der Bewegungseinrichtung (122) mit einem Förderluftdruck von Förderluft (136) zum Fördern von Sand (104) zu der Austragsöffnung (120) aufweist, und ausgebildet ist um die Austragsöffnung (120) unter Verwendung des Förderluftdrucks zu bewegen.

5. Vorrichtung (102) gemäß einem der vorangegangenen Ansprüche, bei der die Bewegungseinrichtung (122) eine elektrische Schnittstelle zu einer Steuereinrichtung (144) des Schienenfahrzeugs (100) aufweist und ausgebildet ist, um die Austragsöffnung (120) unter Verwendung eines über die elektrische Schnittstelle empfangenen elektrischen Steuersignals (150) zu bewegen.

6. Vorrichtung (102) gemäß einem der vorangegangenen Ansprüche, mit einer beweglich gelagerten Konsole (260), wobei das die Austragsöffnung (120) umfassende Sandrohr (262) an der Konsole (260) befestigt ist und wobei die Bewegungseinrichtung (122) ausgebildet ist, um die Konsole (260) zu bewegen, um die Austragsöffnung (120) zwischen einer Austragsposition (126) und einer Ruheposition (128) zu bewegen.

7. Vorrichtung (102) gemäß einem der vorangegangenen Ansprüche, mit einem die Austragsöffnung (120) umfassenden Teleskoprohr, wobei die Bewegungseinrichtung (122) ausgebildet ist, um Teilröhren (372, 374) des Teleskoprohr relativ zu einander zu bewegen, um die Austragsöffnung (120) zwischen der Austragsposition (126) und der Ruheposition (128) zu bewegen.

8. Vorrichtung (102) gemäß einem der vorangegangenen Ansprüche, mit einem die Austragsöffnung (120) umfassenden Endstück (266), das mechanisch mit der Bewegungseinrichtung (122) verbunden und als ein auswechselbares Verschleißteil ausgeführt ist.

9. Vorrichtung (102) gemäß einem der vorangegangenen Ansprüche, mit zumindest einem elastischen Element (270) zum elastischen Lagern der Austragsöffnung (120).

10. Vorrichtung (102) gemäß einem der vorangegangenen Ansprüche, mit einem Sandkasten (130) zum Bevorraten von Sand (104) und einer Dosiereinrichtung (134) zum Bereitstellen von Sand (104) aus dem Sandkasten (130) an die Austragsöffnung (120).

11. Schienenfahrzeug (100) mit einer Vorrichtung (102) gemäß einem der vorangegangenen Ansprüche, wobei die Vorrichtung (102) benachbart zu dem Rad (108) angeordnet ist und sich die Austragsöffnung (120) in der Austragsposition (126) näher an dem Kontaktpunkt (106) befindet als in der Ruheposition (128).

12. Verfahren zum Betreiben einer Vorrichtung (102) gemäß einem der Ansprüche 1 bis 10, wobei das Verfahren die folgenden Schritte umfasst: Hinbewegen (401) des Sandrohrs (262) mit der Austragsöffnung (120) von der Ruheposition (128) in die Austragsposition (126) ansprechend auf einen Beginn eines Sandungsvorgangs, wobei das Sandrohr (262) geradlinig entlang der Längserstreckungsachse des Sandrohrs (262) bewegt wird; und Zurückbewegen (403) des Sandrohrs (262) mit der Austragsöffnung (120) von der Austragsposition (126) in die Ruheposition (128) ansprechend auf ein Ende des Sandungsvorgangs, wobei das Sandrohr (262) geradlinig entlang der Längserstreckungsachse des Sandrohrs (262) bewegt wird.

13. Verfahren gemäß Anspruch 12, wobei die Schritte (401, 403) des Hinbewegens und Zurückbewegens durchgeführt werden, während das Schienenfahrzeug (100) auf der Schiene (110) fährt.

## Claims

1. Device (102) for introducing sand (104) at a contact point (106) between a wheel (108) of a rail vehicle (100) and a rail (110), wherein the device (102) has the following features:
a sand pipe (262) having a distribution opening (120) for distributing sand (104); and
a moving apparatus (122) which is configured to move the sand pipe (262) in a straight line along a longitudinal extension axis of the sand pipe (262), in order to move the distribution opening (120) between a distribution position (126) for distributing sand during a sanding procedure and a resting position (128) for the protected standby of the distribution opening (120) for a future sanding procedure;
**characterised in that**
the distribution opening (120) is in the resting position further from the wheel (108) and the rail (110) than in the distribution position, when the device (102) is installed at the rail vehicle (100).

2. Device (102) according to claim 1, in which the moving apparatus (122) is configured to move the distribution opening (120) in reaction to a start of a sanding procedure from the resting position (128) to the distribution position (126), and in reaction to an end of the sanding procedure from the distribution position (126) to the resting position (128).

3. Device (102) according to any of the preceding claims, in which the moving apparatus (122) has a compressed air cylinder (140) and is configured
to move the distribution opening (120) in reaction to pressure being applied to the compressed air cylinder (140).

4. Device (102) according to any of the preceding claims, in which the moving apparatus (122) has a delivery air pressure interface (148) for applying a delivery air pressure of delivery air (136) to the moving apparatus (122) for delivering sand (104) to the distribution opening (120), and is configured to move the distribution opening (120) by using the delivery air pressure.

5. Device (102) according to any of the preceding claims, in which the moving apparatus (122) has an electrical interface to a control apparatus (144) of the rail vehicle (100) and is configured to move the distribution opening (120) by using an electrical control signal (150) received via the electrical interface.

6. Device (102) according to any of the preceding claims, having a movably mounted console (260), wherein the sand pipe (262) comprising the distribution opening (120) is fastened to the console (260) and wherein the moving apparatus (122) is configured to move the console (260) in order to move the distribution opening (120) between a distribution position (126) and a resting position (128).

7. Device (102) according to any of the preceding claims, having a telescopic pipe comprising the distribution opening (120), wherein the moving apparatus (122) is configured to move partial pipes (372, 374) of the telescopic pipe relatively to one another, in order to move the distribution opening (120) between the distribution position (126) and the resting position (128).

8. Device (102) according to any of the preceding claims, having an end piece (266), comprising the distribution opening (120), which is connected mechanically to the moving apparatus (122) and is designed in the form of a replaceable wear part.

9. Device (102) according to any of the preceding claims, having at least one elastic element (270) for the resilient mounting of the distribution opening (120).

10. Device (102) according to any of the preceding claims, having a sand box (130) for storing sand (104) and a dispensing apparatus (134) for providing sand (104) from the sand box (130) to the distribution opening (120).

11. Rail vehicle (100) having a device (102) according to any of the preceding claims, wherein the device (102) is arranged adjacent to the wheel (108) and the distribution opening (120) is closer to the contact point (106) in the distribution position (126) than in the resting position (128).

12. Method for operating a device (102) according to any of claims 1 to 10, wherein the method comprises the following steps:
moving (401) the sand pipe (262) having the distribution opening (120) from the resting position (128) to the distribution position (126) in reaction to a start of a sanding procedure, wherein the sand pipe (262) is moved in a straight line along the longitudinal extension axis of the sand pipe (262); and
moving back (403) the sand pipe (262) having the distribution opening (120) from the distribution position (126) to the resting position (128) in reaction to an end of the sanding procedure, wherein the sand pipe (262) is moved in a straight line along the longitudinal extension axis of the sand pipe (262).

13. Method according to claim 12, wherein the steps (401, 403) of moving and moving back are carried out while the rail vehicle (100) is traveling on the rail (110).

## Revendications

1. Dispositif (102) pour l'introduction de sable (104) au niveau d'un point de contact (106) entre une roue (108) d'un véhicule ferroviaire (100) et un rail (110), dans lequel le dispositif (102) présente les caractéristiques suivantes :
un tube de sable (262) avec une ouverture de décharge (120) pour décharger du sable (104) ; et
un appareil de déplacement (122) qui est réalisé afin de déplacer le tube de sable (262) en ligne droite le long d'un axe d'étendue longitudinale du tube de sable (262) afin de déplacer l'ouverture de décharge (120) entre une position de décharge (126) pour décharger du sable pendant une procédure de sablage et une position de repos (128) pour maintenir protégée l'ouverture de décharge (120) pour une procédure de sablage imminente ;
**caractérisé en ce que**
l'ouverture de décharge (120) est éloignée davantage de la roue (108) et du rail (110) dans la position de repos que dans la position de décharge lorsque le dispositif (102) est monté au niveau du véhicule ferroviaire (100).

2. Dispositif (102) selon la revendication 1, pour lequel l'appareil de déplacement (122) est réalisé afin de déplacer l'ouverture de décharge (120) de la position de repos (128) dans la position de décharge (126) en réponse à un début d'une procédure de sablage et de la position de décharge (126) dans la position de repos (128) en réponse à une fin de la procédure de sablage.

3. Dispositif (102) selon l'une quelconque des revendications précédentes, pour lequel l'appareil de déplacement (122) présente un vérin pneumatique (140), et est réalisé
afin de déplacer l'ouverture de décharge (120) en réponse à une application de pression sur le vérin pneumatique (140).

4. Dispositif (102) selon l'une quelconque des revendications précédentes, pour lequel l'appareil de déplacement (122) présente une interface de pression d'air de transport (148) pour l'application d'une pression d'air de transport (136) au dispositif de déplacement (122) pour le transport de sable (104) vers l'ouverture de décharge (120), et est réalisé afin de déplacer l'ouverture de décharge (120) en utilisant la pression d'air de transport.

5. Dispositif (102) selon l'une quelconque des revendications précédentes, pour lequel l'appareil de déplacement (122) présente une interface électrique vers un dispositif de commande (144) du véhicule ferroviaire (100) et est réalisé afin de déplacer l'ouverture de décharge (120) en utilisant un signal de commande (150) électrique reçu par le biais de l'interface électrique.

6. Dispositif (102) selon l'une quelconque des revendications précédentes, avec une console (260) logée de manière mobile, dans lequel le tube de sable (262) comprenant l'ouverture de décharge (120) est fixé au niveau de la console (260) et dans lequel l'appareil de déplacement (122) est réalisé afin de déplacer la console (260), afin de déplacer l'ouverture de décharge (120) entre une position de décharge (126) et une position de repos (128).

7. Dispositif (102) selon l'une quelconque des revendications précédentes, avec un tube télescopique comprenant l'ouverture de décharge (120), dans lequel l'appareil de déplacement (122) est réalisé afin de déplacer des tubes partiels (372, 374) du tube télescopique l'un par rapport à l'autre, afin de déplacer l'ouverture de décharge (120) entre la position de décharge (126) et la position de repos (128).

8. Dispositif (102) selon l'une quelconque des revendications précédentes, avec un embout (266) comprenant l'ouverture de décharge (120) qui est relié de manière mécanique à l'appareil de déplacement (122) et est réalisé comme une pièce d'usure interchangeable.

9. Dispositif (102) selon l'une quelconque des revendications précédentes, avec au moins un élément élastique (270) pour le logement élastique de l'ouverture de décharge (120).

10. Dispositif (102) selon l'une quelconque des revendications précédentes, avec un bac à sable (130) pour le stockage de sable (104) et un appareil de dosage (134) pour la fourniture de sable (104) provenant du bac à sable (130) au niveau de l'ouverture de décharge (120).

11. Véhicule ferroviaire (100) avec un dispositif (102) selon l'une quelconque des revendications précédentes, dans lequel le dispositif (102) est agencé de manière contigüe à la roue (108) et l'ouverture de décharge (120) dans la position de décharge (126) se trouve plus près du point de contact (106) que dans la position de repos (128).

12. Procédé de fonctionnement d'un dispositif (102) selon l'une quelconque des revendications 1 à 10, dans lequel le procédé comprend les étapes suivantes :
le déplacement (401) du tube de sable (262) avec l'ouverture de décharge (120) de la position de repos (128) dans la position de décharge (126) en réponse à un début d'une procédure de sablage, dans lequel le tube de sable (262) est déplacé en ligne droite le long de l'axe d'étendue longitudinale du tube de sable (262) ; et
le replacement (403) du tube de sable (262) avec l'ouverture de décharge (120) de la position de décharge (126) dans la position de repos (128) en réponse à une fin de la procédure de sablage, dans lequel le tube de sable (262) est déplacé en ligne droite le long de l'axe d'étendue longitudinale du tube de sable (262).

13. Procédé selon la revendication 12, dans lequel les étapes (401, 403) du déplacement et du replacement sont réalisées pendant que le véhicule ferroviaire (100) se déplace sur le rail (110).
